# EUROPÄISCHE PATENTSCHRIFT

(11) **EP 1 230 101 B1**
(45) Veröffentlichungstag und Bekanntmachung des Hinweises auf die Patenterteilung: **07.04.2004**
(21) Anmeldenummer: 00966131.5
(22) Anmeldetag: 06.10.2000
(51) Int. Cl.: B60K 37/04, E05F 5/02

(54) **ANSCHLAGPUFFER**
FIXED STOP ABSORBER
TAMPON DE BUTEE

(30) Priorität: 06.11.1999 DE 19953448
(43) Veröffentlichungstag der Anmeldung: 14.08.2002
(73) Patentinhaber: Volkswagen AG, 38436 Wolfsburg (DE)
(72) Erfinder: MARONDEL, Hubert, 38108 Braunschweig (DE); HANSEN, Christiane, 38554 Weyhausen (DE)
(86) Internationale Anmeldenummer: PCT/EP2000/009827
(87) Internationale Veröffentlichungsnummer: WO 2001/034422

(56) Entgegenhaltungen:
- DE-U- 29 716 111
- FR-A- 2 565 649
- FR-A- 2 626 822

## Beschreibung

Die Erfindung betrifft einen Anschlagpuffer nach dem Oberbegriff des Anspruchs 1.

Anschlagpuffer, die zwischen zwei relativ zueinander beweglichen Kraftfahrzeugteilen angeordnet werden, sind an sich bekannt.

So ist aus der DE 297 16 111 U1 ein Anschlagelement bekannt, das zwischen einem Träger und einem beweglichen Kraftfahrzeugteil angeordnet ist, wobei ein Anschlagteil gegenüber dem Lagerteil höhenverstellbar und in der Endposition fixierbar ist. Dieser Anschlagpuffer soll insbesondere zwischen der Karosserie und der Klappe eines Kraftfahrzeugs angeordnet werden. Nachteilig ist dabei, daß dieses Anschlagelement zwar einen dämpfend wirkenden Anschlagkopf aufweist, dieser aber nicht geeignet ist, im Betrieb dauernd einen definierbaren Kontakt sicherzustellen, insbesondere wenn das Kontaktelement abgenutzt wird. Die Folge ist, daß das bewegliche Kraftfahrzeugteil gegenüber dem Träger zu klappern beginnt.

Ein gattungsgemäßer Anschlagpuffer ist ferner aus der FR 2 565 649 A1 bekannt. Dieser Anschlagpuffer weist ein Befestigungselement zur Befestigung an einem ersten Kraftfahrzeugteil auf, wobei das Befestigungselement mit einem Kontakelement zur Kontaktierung eines zweiten Kraftfahrzeugteils beweglich verbunden ist. Der Abstand zwischen dem Kontaktelement und dem ersten Kraftfahrzeugteil ist einstellbar. Ferner ist ein Federelement zur Ausübung einer Rückstellkraft zwischen dem Befestigungselement und dem Kontaktelement vorhanden. Das Befestigungselement ist mit einem Grundkörper zur Befestigung am ersten Kraftfahrzeugteil verbindbar, wobei der Grundkörper und das Kontaktelement durch ein Federelement miteinander verbunden sind.

Der vorliegenden Erfindung liegt die Aufgabe zugrunde, einen höhenverstellbaren Anschlagpuffer zu schaffen, der einen definierbaren, ständigen Kontakt zwischen zwei Kraftfahrzeugteilen ermöglicht.

Diese Aufgabe wird erfindungsgemäß durch einen Anschlagpuffer mit den Merkmalen des Anspruchs 1 gelöst.

Der erfindungsgemäße Anschlagpuffer weist somit ein einen Kopf aufweisendes Befestigungselement zur Befestigung an einem ersten Kraftfahrzeugteil auf. Das Befestigungselement ist beweglich mit einem Kontaktelement zur Kontaktierung eines zweiten Kraftfahrzeugteils verbunden, wobei der Abstand zwischen dem Kontaktelement und dem ersten Kraftfahrzeugteil einstellbar ist. Ein Federelement übt dabei eine Rückstellkraft zwischen dem Befestigungselement und dem Kontaktelement aus. Erfindungsgemäß weist das Kontaktelement einen zentrischen Hohlraum auf, in dem der Kopf des Befestigungselements angeordnet ist, wobei der Hohlraum mit einer Einstellöffnung versehen ist, über die der Kopf des Befestigungselementes für eine Einstellung des Befestigungselementes her zugänglich ist.

Bei einer vorteilhaften Ausgestaltung der Erfindung ist das Befestigungselement als Schraubenelement ausgebildet. Dadurch läßt sich das Befestigungselement, und damit das Kontaktelement, in einfacher Weise aus dem ersten Kraftfahrzeugteil hinaus- oder hereindrehen.

Mit Vorteil ist am Befestigungselement ein Abstützelement für das Federelement angeordnet. Das Abstützelement dient dabei dem Federelement als Widerlager, um das Befestigungselement und das Kontaktelement gegeneinader zu verspannen. Durch die Anordnung des Abstützelementes am Befestigungselement wird das Abstützelement bei einer Verstellung des Bestigungselements gegenüber dem ersten Kraftfahrzeugteil mit verstellt, so daß die Verstellung des Federweges auf einfache Weise möglich ist.

In einer weiteren vorteilhaften Ausgestaltung sind das Befestigungselement und das Kontaktelement im wesentlichen zylindrisch und axial beweglich zueinander ausgebildet.

In einer besonders vorteilhaften Ausgestaltung ist das Abstützelement außen radial um das Befestigungssungselement herum angeordnet, so daß das Federelement sich daran abstützen kann.

Vorteilhafterweise ist das Federlelement als Spiralfeder ausgebildet und zwischen dem Abstützelement und Kontaktelement angeordnet. Dadurch, daß dieses einfach aufgebaute Federelement zwischen den Abstützelement und dem Kontaktelement angeordnet ist, läßt sich eine besonders kompakte Bauform herstellen.

Mit Vorteil weist das Abstützelement ein Führungsmittel, insbesondere eine Nut oder eine Rille, für das Federelement auf. Dadurch wird verhindert, daß das abgestützte Federelement (z.B. ein Ende der Spiralfeder) sich seitlich verschieben kann.

In einer weiteren Ausgestaltung des erfindungsgemäßen Anschlagpuffers ist das Befestigungselement mit einem Grundkörper zur Befestigung am ersten Kraftfahrzeugteil verbindbar. Somit weist das Befestigungselement mit dem Grundkörper eine speziell für die Befestigung ausgebildete Einheit auf, mit der eine Anpassung an verschiedene Mate ialien möglich ist. Bei dieser Ausführungsform ist es vorteilhaft, wenn das Federlelement als Spiralfeder ausgebildet ist und zwischen dem Grundkörper und Kontaktelement angeordnet ist.

In vorteilhafter Weise ist der Grundkörper über eine Rastverbindung mit dem ersten Kraftfahrzeugteil verbindbar. Damit ist eine einfache Montage des Anschlagpuffers möglich.

Vorteilhafterweise ist die Endlage des Kontaktelementes mit einer Schraubenverbindung zwischen Grundkörper und Kontaktelement einstellbar. Dadurch kann ein definierter Abstand zwischen dem ersten und zweiten Kraftfahrzeugteil hergestellt werden.

In einer ebenfalls vorteilhaften Ausgestaltung ist mindestens ein Ende des Federelements, insbesondere der Spiralfeder, in einer ersten Nut des Kontaktelementes, einer zweiten Nut des Grundkörpers oder am Abstützelement angeordnet. Durch die Nut wird die Spiralfeder sicher im Anschlagpuffer gehalten. Auch ist ein einfacher Zusammenbau möglich.

Mit Vorteil weist das Kontaktelement eine Kappe aus TPE zur Kontaktierung des zweiten Kraftfahrzeugteils auf.

Besonders vorteilhaft ist es, wenn der erfindungsgemäße Anschlagpuffer im Zusammenhang mit einem Handschuhfachdeckel verwendet wird, da damit eine einfache Einstellung eines definierbaren Kontaktes zwischen dem Armaturenbrett als erstem Kraftfahrzeugteil und dem Handschuhfachdeckel als zweitem Kraftfahrzeugteil möglich ist.

Die Erfindung wird nachfolgend unter Bezugnahme auf die Figuren der Zeichnungen an mehreren Ausführungsbeispielen näher erläutert. Es zeigen:
- Fig. 1: eine Seitenansicht einer ersten Ausführungsform des erfindungsgemäßen Anschlagpuffers;
- Fig. 2: eine Schnittansicht der ersten Ausführungsform des erfindungsgemäßen Anschlagpuffers nach Fig. 1 entlang der Linie A-A;
- Fig. 3: eine dreidimensionale Ansicht der ersten Ausführungsform des erfindungsgemäßen Anschlagpuffers;
- Fig. 4: eine Seitenansicht einer zweiten Ausführungsform des erfindungsgemäßen Anschlagpuffers;
- Fig. 5: eine Schnittansicht der zweiten Ausführungsform des erfindungsgemäßen Anschlagpuffers nach Fig. 4 entlang der Linie A-A.

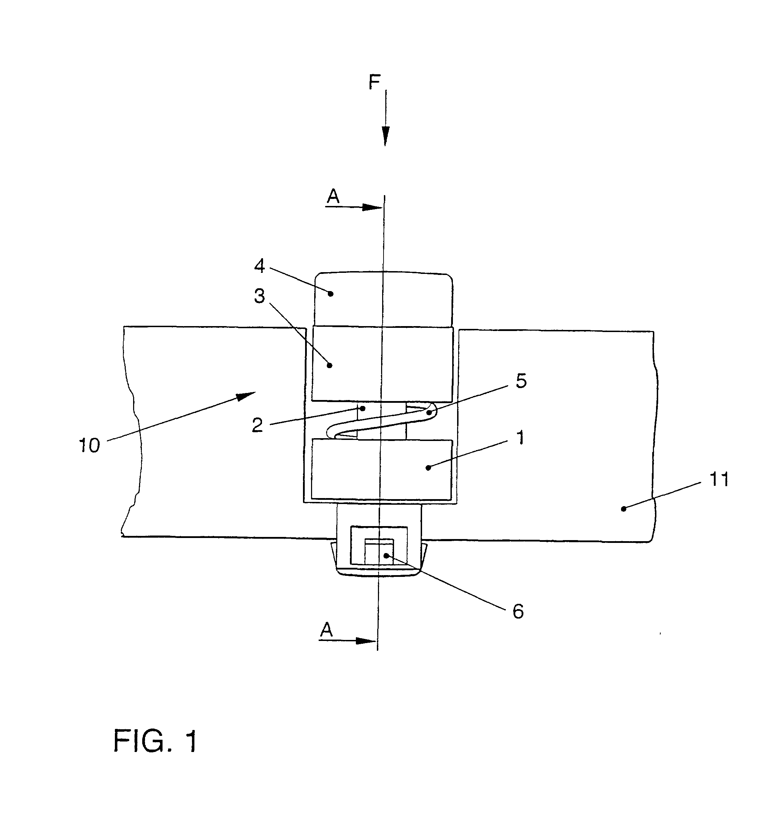

In Fig. 1 ist eine Seitenansicht einer ersten Ausführungsform eines erfindungsgemäßen Anschlagpuffers 10 dargestellt, der mit einem ersten Kraftfahrzeugteil 11 verbunden ist. Im Aufbruch ist als Verbindung zwischen Anschlagpuffer 10 und dem ersten Kraftfahrzeugteil 11 eine Rastverbindung 6 dargestellt.

Im vorliegenden Fall ist das erste Kraftfahrzeugteil 11 ein Teil eines Armaturenbretts in einem Kraftfahrzeug. Der Anschlagpuffer 10 soll dazu dienen, den Anschlag eines hier nicht dargestellten Handschuhfachdeckels als zweiten Kraftfahrzeugteil abzufedern. Es soll dafür gesorgt werden, daß ein definierter Abstand zwischen dem Armaturenbrett und dem Handschuhfachdeckel bestehen bleibt. Insbesondere soll durch diese Beabstandung zwischen den Teilen kein Klappern auftreten. Die Kraftwirkung des Handschuhfachdeckels auf den Anschlagpuffer 10 wird in Fig. 1 durch den Pfeil F dargestellt.

In alternativen Ausgestaltungen kann der erfindungsgemäße Anschlagpuffer 10 auch zwischen anderen Kraftfahrzeugteilen, die relativ zueinander beweglich sind, angeordnet werden.

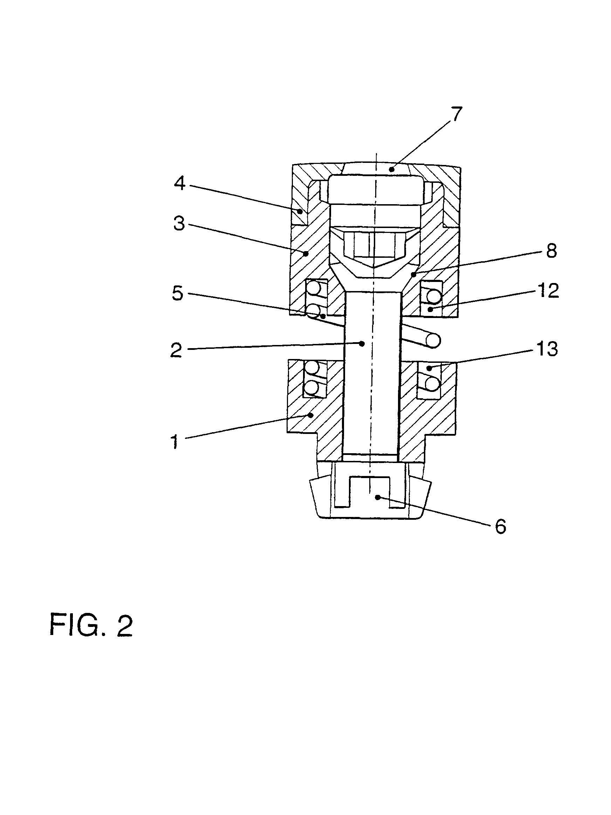

Der Anschlagpuffer 10, dessen Aufbau in Fig. 2 näher beschrieben wird, weist als Befestigungselement am ersten Kraftfahrzeugteil einen Grundkörper 1 auf, der über die Rastverbindung 6 mit dem ersten Kraftfahrzeugteil 11 verbunden ist. Der Grundkörper 1 ist beweglich mit einem Kontaktelement 3 verbunden, wobei die Relativbewegung zwischen Grundkörper 1 und Kontaktelement 3 hier in axialer Richtung erfolgt. In der hier dargestellten Ausführungsform weisen Grundkörper 1 und Kontaktelement 3 eine im wesentlichen zylindrische Außenkontur auf.

Oben auf dem Kontaktelement 3 ist eine Kappe 4 angeordnet, die aus weichem Material (z.B. TPE) besteht. Die Kappe 4 ist dazu bestimmt, mit dem hier nicht dargestellten Handschuhfachdeckel im geschlossenen Zustand in Kontakt zu treten. Das weiche Material dient dabei der Dämpfung des Kontaktes zwischen den Kraftfahrzeugteilen.

In Fig. 1 ist auch ein Teil eines Federelementes 5 und einer Einstellschraube 2 dargestellt, deren Funktion in Fig. 2 dargestellt wird.

Fig. 2 zeigt eine Schnittansicht entlang der Linie A-A der Fig. 1, wobei aus Gründen der Übersichtlichkeit das erste Kraftfahrzeugteil 11 hier weggelassen ist.

Im unteren Bereich des Anschlagpuffers 1 ist der Grundkörper 1 angeordnet, der über das Rastelement 6 mit dem ersten Kraftfahrzeugteil 11 verbindbar ist. In den Grundkörper 1 ist eine Einstellschraube 2 in axialer Richtung eingeschraubt.

Das Kontaktelement 3 weist in axialer Richtung einen zentrischen Hohlraum mit einer Einstellöffnung 7 am oberen Ende auf. In diesem Hohlraum ist der Kopf der Einstellschraube 2 angeordnet. Der axiale Hohlraum ist so ausgebildet, daß der Kopf der Einstellschraube 2 sich in einer oberen Endlage gegen einen in den Hohlraum vorragenden Vorsprung 8 des Kontaktelements 3 abstützt. In einer unteren Endlage stößt das Kontaktelement 3 gegen den Grundkörper 1.

Somit kann sich das Kontaktelement 3 in axialer Richtung zwischen der unteren Endlage und der oberen Endlage bewegen. Die obere Endlage kann dadurch verändert werden, daß die Einstellschraube 2 über einen Innensechrund mit einem geeigneten Werkzeug erfaßt wird und in axialer Richtung in den Grundkörper 1 hinein- bzw. herausgeschraubt wird. Typischerweise kann damit in jeder Richtung eine axiale Justierung von ca. 2 mm vorgenommen werden. In alternativen Ausführungsformen weist der Kopf der Einstellschraube 2 eine Innensechskant- oder eine Torx-Kontur auf.

Gegen die obere Endlage wird das Kontaktelement 3 im zusammengebauten Zustand durch das Federelement 5 gedrückt, d.h. das Kontaktelement 3 liegt immer mit einer Vorspannung gegen den Kopf der Einstellschraube 2 an.

Durch die Rückstellkraft des Federelementes 5 wird sichergestellt, daß das Kontaktelement 3, und mit ihm die Kappe 4, immer mit einer definierten Vorspannung gegen das hier nicht dargestellte zweite Kraftfahrzeugteil drückt, so daß ein bestimmter Spalt zwischen den Kraftfahrzeugteilen gehalten werden kann.

Sollte nach einiger Zeit eine Abnutzung der Kappe 4 auftreten, so läßt sich durch eine einfache Nachjustierung mit der Einstellschraube 2 wieder ein definierbarer Abstand zwischen dem ersten und dem zweiten Kraftfahrzeugteil einstellen, so daß ein Klappern der Teile gegeneinander verhindert wird.

Im vorliegenden Fall ist das Federelement 5 als Spiralfeder ausgebildet, deren Enden in einer ersten Nut 12 im Kontaktelement 3 und einer zweiten Nut 13 im Grundkörper 1 axial gelagert sind. Dadurch befindet sich das Federelement 5 gut geschützt im Inneren des Anschlagpuffers 10; die Federwindungen sind von außen nur in einem kleinen Spalt zugänglich. Zur Vermeidung eines Einklemmens in diesem Spalt kann zwischen Grundkörper 1 und Kontaktelement 3 ein Faltenbalg vorgesehen sein.

In alternativen Ausführungsformen wird anstelle einer Spiralfeder ein Tellerfederpaket oder ein elastisches Gummielement verwendet. Auch lassen sich grundsätzlich verschiedene Federelemente in Kombination verwenden.

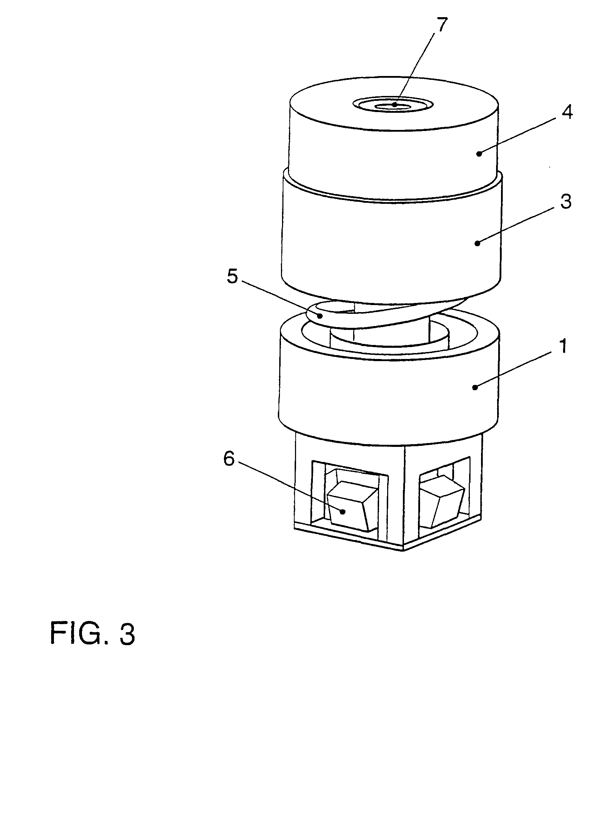

In Fig. 3 ist der erfindungsgemäße Anschlagpuffer 10 in einer perspektivischen Ansicht dargestellt. Am Grundkörper 1 ist unten ein quadratischer Ansatz angeordnet, an dessen Seitenflächen Rastelemente 6 angeordnet sind. Mit diesen Rastelementen 6 ist der Anschlagpuffer 10 mit einem hier nicht dargestellten ersten Kraftfahrzeugteil 11 verbindbar.

Oberhalb des Grundkörpers 1 ist das Kontaktelement 3 mit der aus weichem TPE bestehenden Kappe 4 angeordnet. Mittig ist in der Kappe 4 die Einstellöffnung 7 angeordnet, in die z.B. ein Werkzeug zur Einstellung der Einstellschraube 2 einführbar ist (siehe Fig. 2). Das Federelement 5 übt eine Rückstellkraft auf das Kontaktelement 3 aus.

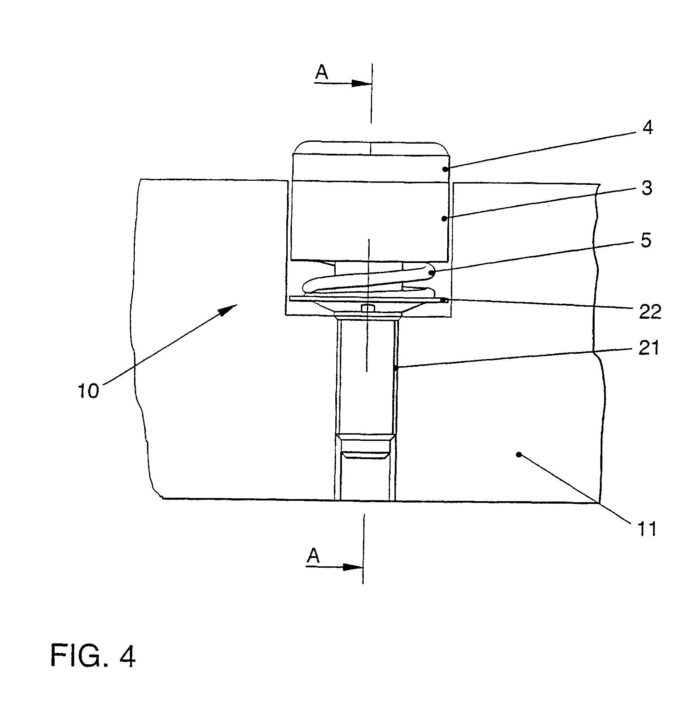

In Fig. 4 ist eine zweite Ausführungsform des erfindungsgemäßen Anschlagpuffers 10 dargestellt.

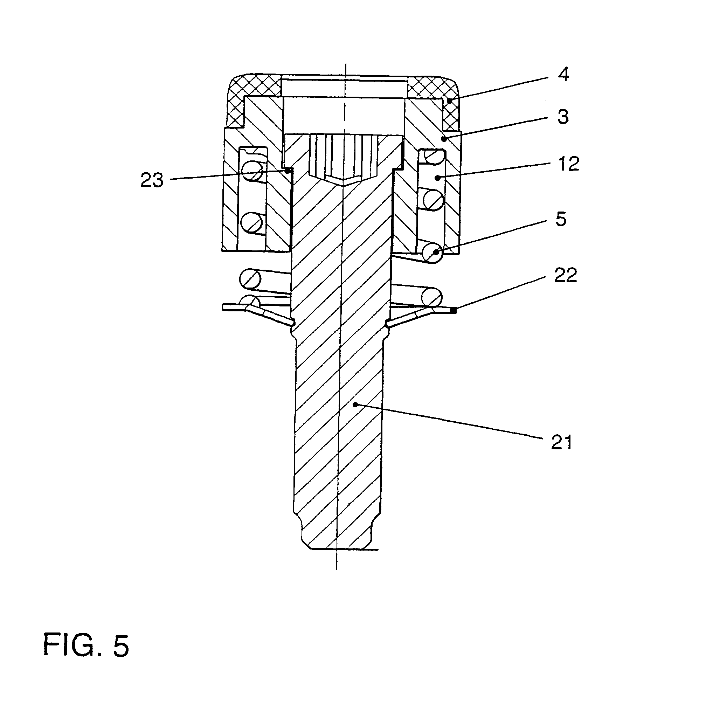

Bei diesem ist das Befestigungselement 21 mit einem Gewinde ausgestattet, mit dem es in das erste Kraftfahrzeugteil 11 eindrehbar ist. Dies ist in Fig. 4 im Aufbruch dargestellt. Oberhalb des mit einem Gewinde versehenen Teils des Befestigungselementes 21 ist ortsfest und radial ein Abstützelement 22 für das Federelement 5 angeordnet. Das untere Ende des hier als Spiralfeder ausgeführten Federelements 5 stützt sich gegen das Abstützelement 22 ab, während das obere Ende sich im Kontaktelement 3 abstützt (siehe Fig. 5). Das Kontaktelement 3 weist oben eine Kappe aus TPE zur Kontaktierung eines hier nicht dargestellten zweiten Kraftfahrzeugteils auf.

In Fig. 5 ist die zweite Ausführungsform im Schnitt dargestellt. Das Kontakteelement 3 weist eine zentrische Bohrung mit einem Absatz 23 auf, gegen den sich der Kopf des als Schraube ausgebildeten Befestigungselementes abstützt.

In Inneren des Kontaktelements 3 ist eine nach unten geöffnete erste Nut 12 angeordnet, in der das obere Ende des Federelements 5 angeordnet ist.

Sollte sich die Kappe 4 des Kontaktelementes 3 während des Gebrauchs etwas abnutzen, so kann diese Verkürzung des Abstandes zwischen dem ersten Kraftfahrzeugteil 11 und der Oberseite der Kappe 4 dadurch ausgeglichen werden, daß das Befestigungselement 21 etwas aus dem ersten Kraftfahrzeugteil herausgedreht wird. Da sich das Federelement 5 an dem Abstützelement 22 abstützt und dieses ortsfest mit dem Befestigungselement verbunden ist, wird das untere Ende des Federelements 5 genauso weit aus dem ersten Kraftfahrzeugteil 11 herausgedreht. Um den gleichen Betrag wird auch der Kopf des Befestigungselements 21 herausgedreht, so daß das Federelement 5 das Kontaktelement 3 um den gleichen Betrag gegen den Absatz 23 drückt. Dadurch ist der Federweg des Federelements 23 zwischen Kontaktelement 3 und Abstützelement 22 konstant. Somit drückt das Federelement 3 das Kontaktelement 5 stets mit einer definierten Kraft gegen das hier nicht dargestellte zweite Kraftfahrzeugteil.

In einer, alternativen Ausführungsform weist das Abstützelement 22 ein Nut oder einen am Umfang umlaufenden Rand auf, der ein seitliches Verrutschen des Federelements 5 auf dem Abstützelement 22 verhindert.

Die Erfindung beschränkt sich in ihrer Ausführung nicht auf die vorstehend angegebenen bevorzugten Ausführungsbeispiele. Vielmehr ist eine Anzahl von Varianten denkbar, die von dem erfindungsgemäßen Anschlagpuffer auch bei grundsätzlich anders gearteten Ausführungen Gebrauch machen.

## Patentansprüche

1. Anschlagpuffer (10) zur Anordnung zwischen einem ersten Kraftfahrzeugteil (11) und einem zweiten Kraftfahrzeugteil, wobei der Anschlagpuffer ein einen Kopf aufweisendes Befestigungselement (2, 21) zur Befestigung am ersten Kraftfahrzeugteil aufweist und das Befestigungselement (2, 21) mit einem Kontaktelement (3) zur Kontaktierung des zweiten Kraftfahrzeugteils beweglich verbunden ist, wobei der Abstand zwischen dem Kontaktelement (3) und dem ersten Kraftfahrzeugteil (11) einstellbar und ein Federelement (5) zur Ausübung einer Rückstellkraft zwischen Befestigungselement (2) und Kontaktelement (3) vorhanden ist, **dadurch gekennzeichnet, daß** das Kontaktelement (3) einen zentrischen Hohlraum aufweist, in dem der Kopf des Befestigungselements (2, 21) angeordnet ist, wobei der Hohlraum mit einer Einstellöffnung (7) versehen ist, über die der Kopf des Befestigungselementes (2, 21) für eine Einstellung des Befestigungselementes (2, 21) her zugänglich ist.

2. Anschlagpuffer nach Anspruch 1, **dadurch gekennzeichnet, daß** das Befestigungselement (21) als Schraubelement ausgebildet ist.

3. Anschlagpuffer nach Anspruch 1 oder 2, **dadurch gekennzeichnet, daß** am Befestigungselement (21) ein Abstützelement (22) für das Federelement (5) angeordnet ist.

4. Anschlagpuffer nach mindestens einem der vorhergehenden Ansprüche, **dadurch gekennzeichnet, daß** das Befestigungselement (21) und das Kontaktelement (3) im wesentlichen zylindrisch ausgebildet sind und axial zueinander beweglich angeordnet sind.

5. Anschlagpuffer nach mindestens einem der vorhergehenden Ansprüche, **dadurch gekennzeichnet, daß** das Abstützelement (22) radial um das Befestigungselement (21) angeordnet ist.

6. Anschlagpuffer nach mindestens einem der vorhergehenden Ansprüche, **dadurch gekennzeichnet, daß** das Federelement (5) als Spiralfeder ausgebildet und zwischen dem Abstützelement (22) und Kontaktelement (3) angeordnet ist.

7. Anschlagpuffer nach mindestens einem der vorhergehenden Ansprüche, **dadurch gekennzeichnet, daß** das Abstützelement (22) ein Führungsmittel, insbesondere eine Nut oder eine Rille, für das Federelement (5) aufweist.

8. Anschlagpuffer nach Anspruch 1, **dadurch gekennzeichnet, daß** das Befestigungselement (2) mit einem Grundkörper (1) zur Befestigung am ersten Kraftfahrzeugteil verbindbar ist, wobei Grundkörper (1) und Kontaktelement (3) durch das Federelement (5) miteinander verbunden sind.

9. Anschlagpuffer nach Anspruch 8, **dadurch gekennzeichnet, daß** das Federelement (5) als Spiralfeder ausgebildet und zwischen dem Grundkörper (1) und dem Kontaktelement (3) angeordnet ist.

10. Anschlagpuffer nach Anspruch 8 oder 9, **dadurch gekennzeichnet, daß** der Grundkörper (1) über eine Rastverbindung (6) mit dem ersten Kraftfahrzeugteil (11) verbindbar ist.

11. Anschlagpuffer nach mindestens einem der Ansprüche 8 bis 10, **dadurch gekennzeichnet, daß** eine Endlage des Kontaktelementes (3) mit einer Schraubenverbindung zwischen Grundkörper (1) und Kontaktelement (3) einstellbar ist.

12. Anschlagpuffer nach mindestens einem der Ansprüche 8 bis 11, **dadurch gekennzeichnet, daß** mindestens ein Ende des Federelements (5), insbesondere ein Teil der Schraubenfeder, in einer ersten Nut (12) des Kontaktelementes (3) oder einer zweiten Nut (13) des Grundkörpers (1) angeordnet ist.

13. Anschlagpuffer nach mindestens einem der vorhergehenden Ansprüche, **dadurch gekennzeichnet, daß** das Kontaktelement (3) eine Kappe (4) aus TPE zur Kontaktierung des zweiten Kraftfahrzeugteils aufweist.

14. Anschlagpuffer nach mindestens einem der vorhergehenden Ansprüche, **dadurch gekennzeichnet, daß** das erste Kraftfahrzeugteil (11) ein Teil eines Armaturenbretts ist und das zweite Kraftfahrzeugteil ein Handschuhfachdeckel ist.

## Claims

1. Stop buffer (10) for arrangement between a first motor-vehicle part (11) and a second motor-vehicle part, the stop buffer having a fastening element (2, 21), which has a head, for fastening to the first motor-vehicle part and the fastening element (2, 21) being connected moveably to a contact element (3) for making contact with the second motor-vehicle part, it being possible for the distance between the contact element (3) and the first motor-vehicle part (11) to be adjusted, and a spring element (5) for exerting a restoring force between the fastening element (2) and contact element (3) being provided, **characterized in that** the contact element (3) has a centred cavity in which the head of the fastening element (2, 21) is arranged, the cavity being provided with an adjustment opening (7) via which the head of the fastening element (2, 21) is accessible for adjusting the fastening element (2, 21).

2. Stop buffer according to Claim 1, **characterized in that** the fastening element (21) is designed as a screw element.

3. Stop buffer according to Claim 1 or 2, **characterized in that** a supporting element (22) for the spring element (5) is arranged on the fastening element (21).

4. Stop buffer according to at least one of the preceding claims, **characterized in that** the fastening element (21) and the contact element (3) are of essentially cylindrical design and are arranged such that they can be moved axially with respect to each other.

5. Stop buffer according to at least one of the preceding claims, **characterized in that** the supporting element (22) is arranged radially about the fastening element (21).

6. Stop buffer according to at least one of the preceding claims, **characterized in that** the spring element (5) is designed as a spiral spring and is arranged between the supporting element (22) and contact element (3).

7. Stop buffer according to at least one of the preceding claims, **characterized in that** the supporting element (22) has a guide means, in particular a groove or a flute, for the spring element (5).

8. Stop buffer according to Claim 1, **characterized in that** the fastening part (2) can be connected to a base body (1) for fastening to the first motor-vehicle part, the base body (1) and contact element (3) being connected to each other by the spring element (5).

9. Stop buffer according to Claim 8, **characterized in that** the spring element (5) is designed as a spiral spring and is arranged between the base body (1) and the contact element (3).

10. Stop buffer according to Claim 8 or 9, **characterized in that** the base body (1) can be connected to the first motor-vehicle part (11) via a latching connection (6).

11. Stop buffer according to at least one of Claims 8 to 10, **characterized in that** an end position of the contact element (3) can be set by a screw connection between the base body (1) and contact element (3).

12. Stop buffer according to at least one of Claims 8 to 11, **characterized in that** at least one end of the spring element (5), in particular one part of the helical spring, is arranged in a first groove (12) of the contact element (3) or in a second groove (13) of the base body (1).

13. Stop buffer according to at least one of the preceding claims, **characterized in that** the contact element (3) has a cap (4) of TPE for making contact with the second motor-vehicle part.

14. Stop buffer according to at least one of the preceding claims, **characterized in that** the first motor-vehicle part (11) is part of a dashboard and the second motor-vehicle part is a glove-compartment cover.

## Revendications

1. Tampon de butée (10) à disposer entre un premier élément de véhicule automobile (11) et un deuxième élément de véhicule automobile, le tampon de butée présentant un élément de fixation (2, 21) doté d'une tête pour le fixer sur le premier élément de véhicule automobile et l'élément de fixation (2, 21) étant relié de manière mobile avec un élément de contact (3) pour entrer en contact avec le deuxième élément de véhicule automobile, la distance entre l'élément de contact (3) et le premier élément de véhicule automobile (11) étant réglable et un élément de ressort (5) étant présent pour exercer une force de rappel entre l'élément de fixation (2) et l'élément de contact (3), **caractérisé en ce que** l'élément de contact (3) présente une cavité centrale dans laquelle est disposée la tête de l'élément de fixation (2, 21), la cavité étant dotée d'un orifice de réglage (7) par lequel la tête de l'élément de fixation (2, 21) est accessible pour régler l'élément de fixation (2, 21).

2. Tampon de butée selon la revendication 1, **caractérisé en ce que** l'élément de fixation (21) est configuré comme un élément fileté.

3. Tampon de butée selon la revendication 1 ou 2, **caractérisé en ce que** sur l'élément de fixation (21) est disposé un élément d'appui (22) pour l'élément de ressort (5).

4. Tampon de butée selon au moins l'une quelconque des revendications précédentes, **caractérisé en ce que** l'élément de fixation (21) et l'élément de contact (3) sont sensiblement cylindriques et sont disposés de manière mobile axialement l'un par rapport à l'autre.

5. Tampon de butée selon au moins l'une quelconque des revendications précédentes, **caractérisé en ce que** l'élément d'appui (22) est disposé radialement autour de l'élément de fixation (21).

6. Tampon de butée selon au moins l'une quelconque des revendications précédentes, **caractérisé en ce que** l'élément de ressort (5) est configuré comme un ressort spiral et est disposé entre l'élément d'appui (22) et l'élément de contact (3).

7. Tampon de butée selon au moins l'une quelconque des revendications précédentes, **caractérisé en ce que** l'élément d'appui (22) présente un moyen de guidage, en particulier une gorge ou une rainure, pour l'élément de ressort (5).

8. Tampon de butée selon la revendication 1, **caractérisé en ce que** l'élément de fixation (2) peut être relié avec un socle (1) pour le fixer sur le premier élément de véhicule automobile, le socle (1) et l'élément de contact (3) étant reliés entre eux par l'élément de ressort (5).

9. Tampon de butée selon la revendication 8, **caractérisé en ce que** l'élément de ressort (5) est configuré comme un ressort spiral et est disposé entre le socle (1) et l'élément de contact (3).

10. Tampon de butée selon la revendication 8 ou 9, **caractérisé en ce que** le socle (1) peut être relié avec le premier élément de véhicule automobile (11) par une connexion à crans (6).

11. Tampon de butée selon au moins l'une quelconque des revendications 8 à 10, **caractérisé en ce qu'**une position terminale de l'élément de contact (3) est réglable avec une connexion filetée entre le socle (1) et l'élément de contact (3).

12. Tampon de butée selon au moins l'une quelconque des revendications 8 à 11, **caractérisé en ce qu'**au moins une extrémité de l'élément de ressort (5), en particulier une partie du ressort spiral, est disposée dans une première gorge (12) de l'élément de contact (3) ou une deuxième gorge (13) du socle (1).

13. Tampon de butée selon au moins l'une quelconque des revendications précédentes, **caractérisé en ce que** l'élément de contact (3) présente un capuchon (4) en TPE pour entrer en contact avec le deuxième élément de véhicule automobile.

14. Tampon de butée selon au moins l'une quelconque des revendications précédentes, **caractérisé en ce que** le premier élément de véhicule automobile (11) est une partie d'un tableau de bord et le deuxième élément de véhicule automobile est un couvercle de boîte à gants.
